# EUROPEAN PATENT APPLICATION

(11) **EP 4 513 237 A1**
(43) Date of publication of application: **26.02.2025**
(21) Application number: 23848857.1
(22) Date of filing: 27.02.2023
(51) Int. Cl.: G01S 19/23, G01S 19/45

(54) **POSITIONING CALIBRATION METHOD AND DEVICE, AND STORAGE MEDIUM**

(30) Priority: 04.08.2022 CN 202210934487
(71) Applicant: ZTE Corporation, Shenzhen, Guangdong 518057 (CN)
(72) Inventor: ZENG, Huipeng, Shenzhen, Guangdong 518057 (CN)
(74) Representative: Savi, Massimiliano
(86) International application number: PCT/CN2023/078464
(87) International publication number: WO 2024/027142

(57) **Abstract**

Embodiments of the present application provide a positioning calibration method and device, and a storage medium. The method comprises: acquiring navigation information and Internet of Vehicles map information of a vehicle (S1000); according to the acquired navigation information and the Internet of Vehicles map information, acquiring road information corresponding to the location of the vehicle (S2000); obtaining motion trajectory information of the vehicle according to the navigation information (S3000); and obtaining location compensation data according to the road information, the motion trajectory information, and the Internet of Vehicles map information (S4000).

## Description

### CROSS-REFERENCE TO RELATED APPLICATION

This application is based on and claims the priority of Chinese patent application No. 202210934487.5 filed on August 4, 2022, the disclosure of which is incorporated herein by reference in its entirety.

### TECHNICAL FIELD

The present disclosure relates to the technical field of in-vehicle navigation, and in particular to a positioning calibration method and device, and a storage medium.

### BACKGROUND

Vehicle-to-everything (V2X) is a crucial component of intelligent transportation and also a key technology for future intelligent transportation systems. In an intelligent transportation system, the positioning and navigation of vehicles are particularly important. For example, V2X requires vehicle positioning to achieve lane-level accuracy. This places high demands on the Global Navigation Satellite System (GNSS).

In related technologies, the GNSS struggles to achieve sub-meter accuracy. There are also some related technologies that utilize the Real-Time Kinematic (RTK) technology to enhance positioning accuracy. However, this not only greatly increases costs, but also the computing power of RTK is limited, and its application is also limited. Therefore, improving positioning accuracy and diversifying usage scenarios are pressing issues that need discussion.

### SUMMARY

Embodiments of the present disclosure provide a positioning calibration method and device, and a storage medium.

In accordance with a first aspect of the present disclosure, an embodiment provides a positioning method, including: acquiring navigation information and V2X map information of a vehicle; acquiring road information corresponding to a location of the vehicle according to the acquired navigation information and V2X map information; obtaining motion trajectory information of the vehicle according to the navigation information; and obtaining location compensation data according to the road information, the motion trajectory information, and the V2X map information.

In accordance with a second aspect of the present disclosure, an embodiment provides an electronic device, including: a memory, a processor, and a computer program stored in the memory and executable by the processor, where the computer program, when executed by the processor, causes the processor to implement the positioning calibration method of the first aspect.

In accordance with a third aspect of the present disclosure, an embodiment provides a computer-readable storage medium, storing computer-executable instructions, where the computer-executable instructions, when executed by a computer, causes the computer to implement the positioning calibration method of the first aspect.

### BRIEF DESCRIPTION OF DRAWINGS

FIG. 1 is a system architecture diagram according to an embodiment of the present disclosure;
FIG. 2 is a flowchart of a positioning calibration method according to an embodiment of the present disclosure;
FIG. 3 is a schematic diagram of a lane positioning error scenario according to an embodiment of the present disclosure;
FIG. 4 is a flowchart of a V2X positioning correction algorithm according to an embodiment of the present disclosure;
FIG. 5 is a structural schematic diagram of a positioning apparatus according to an embodiment of the present disclosure;
FIG. 6 is a structural schematic diagram of a positioning calibration apparatus according to an embodiment of the present disclosure; and
FIG. 7 is a structural schematic diagram of an electronic device according to an embodiment of the present disclosure.

### DETAILED DESCRIPTION

In order to make the objectives, technical schemes and advantages of the present disclosure more apparent, the present disclosure is further described in detail with reference to the accompanying drawings and embodiments. It should be understood that the particular embodiments described herein are only intended to explain the present disclosure, and are not intended to limit the present disclosure.

It is to be noted that although a logical order is shown in the flowcharts, the steps shown or described may be performed, in some cases, in a different order from the order shown or described in the flowcharts. The terms such as "first" and "second" in the description, claims and above-mentioned drawings are intended to distinguish between similar objects and are not necessarily to describe a specific order or sequence.

In the description of embodiments of the present disclosure, unless otherwise explicitly defined, the terms such as "configure", "install", and "connect" should be construed in a broad sense, and those skilled in the art can determine the specific meanings of the above terms in the present disclosure in a rational way in conjunction with the specific contents of embodiments of the technical schemes. In the embodiments of the present disclosure, the term such as "further," "exemplary," or "optionally" is used to represent as an example, an illustration, or a description and should not be construed as being more preferred or advantageous than another embodiment or design. The use of the term such as "further," "exemplary," or "optionally," is intended to present a related concept in a specific manner.

Embodiments of the present disclosure can be applied to in-vehicle devices, such as in-vehicle terminals and on-board units, which is not specifically limited in the embodiments of the present disclosure.

In practical V2X scenarios, positioning inaccuracies are frequently encountered. The inherent properties of GNSS mean that positioning relying solely on GNSS can be affected by real-time environmental changes such as weather and reflections, resulting in perception coordinates that may have errors exceeding 3 meters. For example, a vehicle may actually be running in a left-turn lane, but GNSS data could incorrectly identify it as being in a straight lane. This seriously impacts the ability of the V2X system to determine lane information, which in turn affects functionalities such as traffic light alerts, vehicle-to-vehicle (V2V) collision warnings, left-turn warnings, and other scenarios that heavily rely on lane information.

Embodiments of the present disclosure provide a positioning calibration method and device, and a storage medium. By obtaining road information and motion trajectory information based on navigation information and V2X map information, the method achieves auxiliary positioning calibration, enhances positioning accuracy, and diversifies application scenarios. This scheme can also enable accurate vehicle positioning on the road in scenarios without RTK, not only reducing costs but also broadening the range of application scenarios.

The embodiments of the present disclosure will be described below with reference to the accompanying drawings.

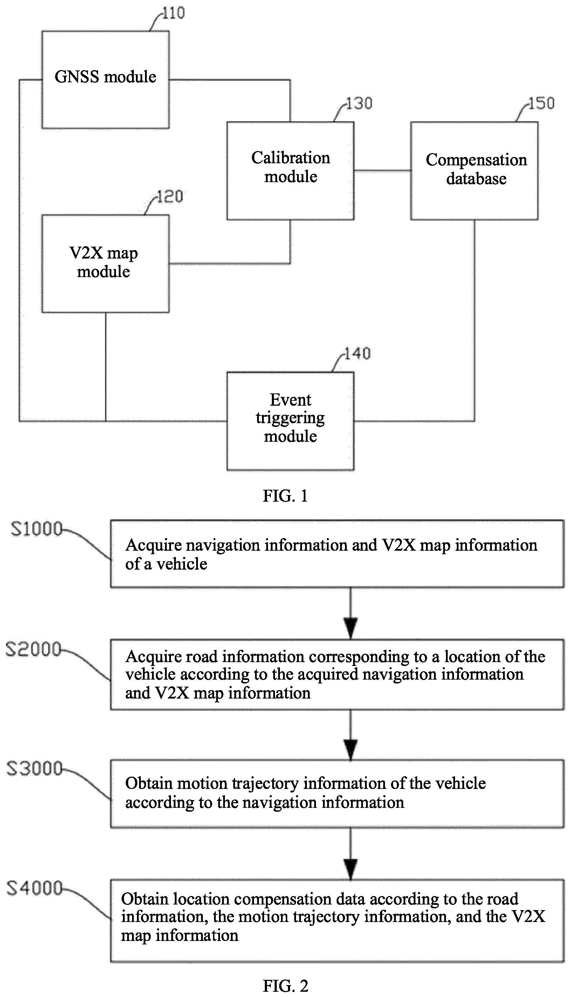

FIG. 1 is a system architecture diagram for a positioning calibration method according to an embodiment of the present disclosure. As shown in FIG. 1, the system architecture may include, but is not limited to, a GNSS module 110, a V2X map module 120, a calibration module 130, an event triggering module 140, and a compensation database 150.

The GNSS module 110 is communicatively connected to the calibration module 130 and the event triggering module 140, respectively, and the GNSS module 110 is configured to acquire navigation information, extract relevant information and send the information to the calibration module 130 and the event triggering module 140.

The V2X map module 120 is communicatively connected to the calibration module 130 and the event triggering module 140, respectively, and the V2X map module 120 is configured to acquire V2X map information, extract relevant information and send the information to the calibration module 130 and the event triggering module 140.

The calibration module 130 is communicatively connected to the compensation database 150, and the calibration module 130 is configured to analyze and calibrate the currently positioned vehicle location according to the received navigation information and the V2X map information, and send the generated location compensation data to the compensation database 150.

The compensation database 150 is communicatively connected to the event triggering module 140, and the compensation database 150 is configured to send the location compensation data generated by the calibration to the event triggering module 140.

The event triggering module 140 is configured to receive navigation information, V2X map information, and location compensation data, and trigger the corresponding scenario event according to relevant information.

In some possible implementations, the V2X map information may include a lane-level high-accuracy map.

In some possible implementations, the calibration module 130 is configured to obtain road information according to the received navigation information and the V2X map information, where the road information includes information related to the lane where the vehicle is currently positioned, such as which lane it is, whether it is a left-turn lane, a straight lane or a right-turn lane. The calibration module 130 is further configured to obtain motion trajectory information according to the navigation information.

In some possible implementations, the calibration module 130 determines and calibrates the vehicle location according to the road information and the motion trajectory information, and generates location compensation information.

In some possible implementations, after determining that the vehicle requires calibration, the calibration module 130 obtains lane data of the lane where the vehicle is currently positioned according to the current navigation information; the calibration module 130 then obtains lane data of the lane where the vehicle actually is according to the motion trajectory information of the vehicle; and based on the lane data of the current positioned lane and the lane data of the actual lane, the corresponding lanes are respectively confirmed in the V2X map information, and the location compensation information is calculated and obtained according to the data such as the relative distance and direction between the lanes provided by the V2X map information.

The scheme of this embodiment does not require the support of the RTK technology. Instead, it utilizes GNSS technology combined with V2X lane-level high-accuracy maps to perform location correction and compensation for the vehicle using only GNSS technology, which has low computational requirements, reduces costs, and alleviates the reliance of low-cost V2X terminals on the RTK technology.

FIG. 2 is a flowchart of a positioning calibration method according to an embodiment of the present disclosure. As shown in FIG. 2, the accurate positioning method can be used for on-board units or in-vehicle terminals. In the embodiment shown in FIG. 2, the positioning method may include, but is not limited to, steps S1000, S2000, S3000, and S4000.

At S 1000, navigation information and V2X map information of a vehicle are acquired.

The navigation information is determined from the GNSS positioning data collected by the GNSS module, and the V2X map information is extracted according to the lane-level high-accuracy map in V2X, where the navigation information may include information such as a location of the moving apparatus at a certain time, a distance traveled by the moving apparatus, a traveling path of the moving apparatus, a traveling mode of the moving apparatus, as well as the latitude, longitude, and altitude of the moving apparatus. It can be understood that the moving apparatus may include, but is not limited to, a vehicle such as a car, a smart car, and a truck, and may also be another vehicle or moving apparatus having relatively fixed travel path rules. In specific embodiments of the present disclosure, for convenience of description, a vehicle is taken as an example for explanation.

In some possible implementations, the lane-level high-accuracy map may be obtained through Road Side Units (RSUs) or broadcast and distribution via the PC5 communication protocol, or through any other suitable method.

In some possible implementations, the lane-level high-accuracy map may also be pre-set in on-board units, in-vehicle terminals, or other portable V2X devices.

At S2000, road information corresponding to a location of the vehicle is acquired according to the acquired navigation information and V2X map information.

According to the navigation information and the V2X map information, the road where the vehicle is currently positioned and the corresponding road information are obtained, where the road information may include information related to the lane in which the vehicle is currently positioned, for example, which lane the corresponding lane is, whether the corresponding lane is uphill or downhill, and lane capability of the corresponding lane, such as whether the lane is a straight lane, a left turn lane, a right turn lane, or a U-turn lane.

At S3000, motion trajectory information of the vehicle is obtained according to the navigation information. Herein, the motion trajectory information is used to characterize the driving trajectory of the vehicle during the current time period or a certain time period.

According to the navigation information, the motion trajectory information of the vehicle during the current time period or a historical time period can be generated, such as the vehicle making a left-turn, making a right-turn, making a U-turn, going straight, going uphill, going downhill, or the like.

At S4000, location compensation data is obtained according to the road information, the motion trajectory information, and the V2X map information.

In some possible implementations, after S4000, the method further includes but is not limited to at least the following steps:
performing compensation calculation on the navigation information according to the location compensation data to obtain the compensated navigation information; and
obtaining positioning information according to the compensated navigation information and the V2X map information.

According to the road information and motion trajectory information, it is determined whether the current positioning of the vehicle is accurate and whether correction calibration is needed, and location compensation data is obtained according to the results of the correction calibration, the correct location of the vehicle on the V2X map is confirmed according to the location compensation data, and the navigation information is adjusted according to the location compensation data to calibrate the positioning of the GNSS.

Herein, the location compensation information may include an offset distance and an offset direction between the lane where the vehicle is currently positioned and the lane where the vehicle should actually be.

In some possible implementations, the road information includes lane driving direction information; and the motion trajectory information includes driving direction information of the moving apparatus. Step S4000 may include, but is not limited to, the following steps:
acquiring first lane data in the V2X map information according to the lane driving direction information;
acquiring second lane data in the V2X map information according to the vehicle driving direction information; and
calculating the location compensation data according to the first lane data and the second lane data.

In some embodiments, the lane driving direction information represents the correct driving direction of the vehicle in the lane, such as right turn, left turn, straight, or U-turn. After acquiring the road information of the lane corresponding to the current positioning information, the lane driving direction information of the lane is obtained according to the road information, thus obtaining the driving trajectory of the vehicle that aligns with the capability of the current lane. The motion trajectory obtained from the navigation information is compared with the driving trajectory corresponding to the current positioned lane. If the trajectories are consistent and the motion trajectory aligns with the lane's capability, i.e., the vehicle driving direction matches the lane driving direction, it is determined that the current vehicle positioning information is accurate and does not require calibration. If the trajectories are inconsistent and the motion trajectory does not align with the lane's capability, i.e., the vehicle driving direction does not align with the lane driving direction, it is determined that the current vehicle positioning information is erroneous, indicating a deviation in lane positioning that requires calibration.

For example, if the navigation information and V2X map information indicate that the vehicle is positioned in a straight lane, but the vehicle driving trajectory shows a right turn, which is not permitted from the straight lane, it is clear that the driving trajectory does not match the current lane capability. In this case, a deviation in positioning has occurred, and calibration is required.

In some possible implementations, after confirming the current positioned lane based on navigation information and V2X map information, the first lane data corresponding to that lane is obtained from the V2X map, the first lane data including multiple consecutive coordinates of the corresponding lane that define the lane in the V2X map; the vehicle driving trajectory during the current time period is extracted from the navigation information, the lane driving direction information is obtained, the lane that matches the driving direction information is confirmed in the V2X map according to this driving direction information, and the second lane data corresponding to this lane is then obtained according to the V2X map, the second lane data including multiple consecutive coordinates of the corresponding lane that define the lane in the V2X map; and the distance and relative direction between the two lanes are calculated according to the first lane data and the second lane data, resulting in the location compensation data.

In some possible implementations, the location compensation data includes at least one of: direction data; or distance data.

After it is confirmed that the positioning has a deviation and requires calibration, according to the motion trajectory information, the lane that aligns with the motion trajectory is identified in the lane-level high-precision V2X map, along with the corresponding road information, i.e., information of the lane where the vehicle should be. After obtaining the information of the lane where the vehicle should be, since the distance and the relative positional relationship between the lanes are included in the V2X map, the distance between the lane where the vehicle should be and the currently positioned lane and/or the offset direction of the currently positioned lane relative to the lane where the vehicle should be can be calculated through the V2X map; and location compensation data is obtained according to the distance and/or the offset direction between the lane where the vehicle should be and the currently positioned lane. According to the obtained offset distance and/or offset direction, the currently positioned lane is calibrated so that the GNSS is positioning the vehicle on the correct lane. Calibration can perform the compensation in the lateral direction of the lane as a compensation dimension. After continuing to compensate in multiple dimensions on other lanes, the compensation can be completed from the entire plane coordinates of latitude and longitude.

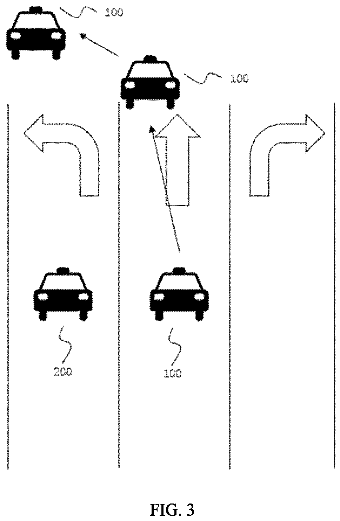

For example, as shown in FIG. 3, the lane where the vehicle 100 is positioned and the corresponding driving trajectory are obtained through current positioning information of GNSS, while the lane where the vehicle 200 is located is the lane where the vehicle should be. It can be seen from the figure that according to the current positioning information of GNSS, the vehicle is driving in the straight lane, but the driving trajectory obtained according to GNSS is a right turn, so the lane where the vehicle should actually be should be a right-turn lane. Through the V2X map information, it can be learned that the straight lane is horizontally offset to the right from the right-turn lane, and at the same time, the distance between the straight lane and the right-turn lane, i.e., the offset distance, can be obtained. The positioning is calibrated according to the offset direction and offset distance such that the vehicle is positioned in the correct lane.

In some possible implementations, step S4000 includes: calculating the location compensation data according to the road information, the motion trajectory information, the V2X map information, and historical compensation data, where the historical compensation data is one of: location compensation data acquired from the past.

After the location compensation data is obtained according to the information of the lane where the vehicle should be and the current lane information, the location compensation data may also be stored in the compensation database. It can be understood that after obtaining the location compensation data, the location compensation data may be stored in the compensation database and also directly sent to the event triggering module to trigger a scenario event; or the location compensation data may be stored in the compensation database and then retrieved by the event triggering module according to needs.

In some possible implementations, obtaining the location compensation data according to the road information, the motion trajectory information, the V2X map information, and historical compensation data includes: calculating current compensation data according to the road information, the motion trajectory information, and the V2X map information; and calculating the location compensation data according to the current compensation data and the historical compensation data. In some implementations, the current compensation data and the historical compensation data are summarized and averaged to obtain average compensation data; and the location compensation data is confirmed according to the average compensation data.

In some possible implementations, calibrating the vehicle location according to the location compensation data includes: obtaining multiple pieces of location compensation data from the compensation database; summarizing and averaging the multiple pieces of location compensation data to obtain average location compensation data; and calibrating the vehicle location according to the average location compensation data.

In some possible implementations, a periodic assessment can be conducted to determine whether positioning calibration is needed, specifically to check if the motion and the current positioned lane match. The generated compensation data is then stored in the compensation database, which contains multiple pieces of compensation data. When a V2X scenario event is triggered that requires the use of compensation data, multiple pieces of compensation data from an adjacent time period can be selected for summarization and averaging, thereby improving compensation accuracy and reducing errors and interference factors.

In some possible implementations, the historical compensation data is obtained according to at least one of:
a time threshold, where historical compensation data that falls within the time threshold is acquired; or
a distance threshold, where historical compensation data that falls within the distance threshold is acquired.

When storing location compensation data in the compensation database, the entry time for each piece of location compensation data is recorded. If the entry time exceeds a specified threshold, the corresponding location compensation data is deleted. For the location compensation data stored in the compensation database, a check is performed to determine whether the offset distance exceeds a distance threshold. If the distance threshold is exceeded, it can be confirmed that the location compensation data is the result of GNSS data errors or other issues, which do not represent normal positioning deviations and lack reference value, and can be deleted.

In some embodiments, when location compensation data is stored in the compensation database, a label is assigned to the corresponding data to record the entry time. This time label allows for tracking the duration of existence of the location compensation data in the compensation database. It can be understood that other suitable methods may also be used to record and retrieve the storage time of location compensation data in the compensation database, without specific limitations imposed in the present disclosure.

As time passes, GNSS navigation information may also change. After a certain period, GNSS positioning may become accurate again without deviation, or the offset direction and offset distance may change. Therefore, by deleting data in the compensation database that has exceeded the threshold for existence time, the timeliness of the location compensation data can be ensured while also reducing the memory requirements of the compensation database.

In some possible implementations, obtaining location compensation data according to the road information, the motion trajectory information, and the V2X map information includes: obtaining the location compensation data according to the road information, the motion trajectory information, the V2X map information, and user feedback information.

When there is a deviation in positioning that requires calibration, user feedback can also be received, such as information about the correct lane the vehicle is currently traveling in or the current driving status, the user feedback location data is obtain. The positioning calibration may then be performed in combination with the user feedback location data, resulting in more accurate location compensation data and reduced errors. It can be understood that the user feedback may be obtained through system-initiated interactions with the user, or it may be proactively provided by the user when they notice a deviation in positioning.

In some possible implementations, in response to the user feedback information indicating that the location compensation data is accurate, a confidence level of the corresponding location compensation data is increased; and in response to the user feedback information indicating that the location compensation data is erroneous, the confidence level of the corresponding location compensation data is decreased.

When there is a deviation in the lane that requires calibration, user reminder information is generated based on the information of the lane where the vehicle should be and presented through an UI interface. For example, if the current driving trajectory indicates a left turn, the information of the lane where the vehicle should be should correspond to a left-turn lane. The system generates user reminder information based on the lane where the vehicle should be, which could be displayed on an in-vehicle tablet as, "Are you making a left turn in a left-turn lane?"

If the user responds "yes", the confidence level of the corresponding location compensation data is increased; and if the user responds "no", the confidence level of the corresponding location compensation data is decreased. In some embodiments, based on confidence level, high-confidence location compensation data is selected for calibration or event triggering, thereby reducing errors and improving the accuracy of the calibration.

In some embodiments, users can respond to the user reminder information and interact through voice feedback or by selecting and clicking on options in the UI interface. The aforementioned interaction methods are provided as illustrative examples and are not specifically limited in the present disclosure.

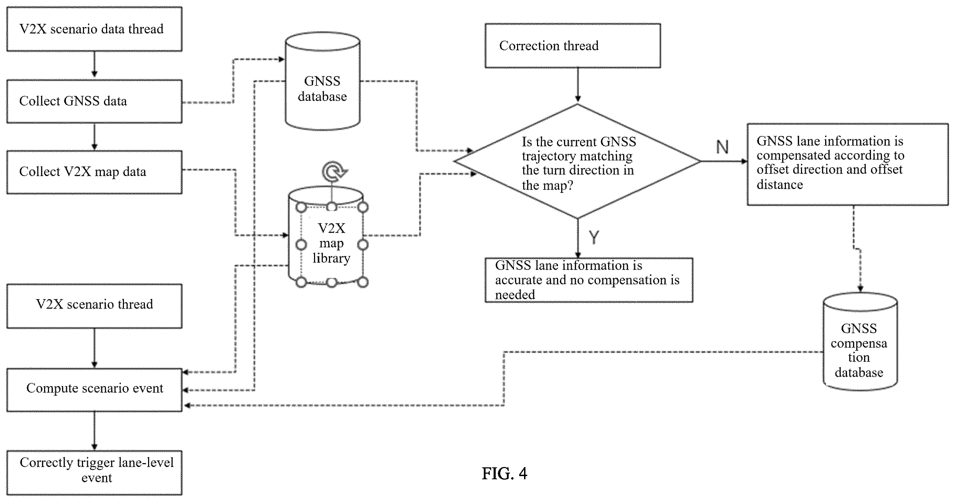

FIG. 4 is a flowchart of a V2X positioning correction algorithm according to an embodiment of the present disclosure. It is shown in FIG. 4.

The V2X scenario data thread collects GNSS data and V2X map data, which are then directed into their respective database queues, where the V2X map data includes lane-level high-accuracy map data.

The correction thread monitors the database in real time. The driving direction of the current positioned lane of the vehicle can be acquired based on GNSS data and V2X map data, and motion trajectory of the vehicle can be acquired based on historical GNSS data, including straight, left turn, right turn, and U-turn, etc.

When the correction thread confirms that the motion trajectory of the vehicle through the intersection does not match the driving direction of the lane according to the V2X map, the correct lane is identified from the V2X map according to the motion trajectory of the vehicle, the position calibration is performed according to the correct lane, as well as the offset direction and offset distance of the current positioned lane of the vehicle, and the compensation direction and compensation distance are recorded and written into the GNSS compensation database. When it is confirmed that the motion trajectory of the vehicle through the intersection matches the driving direction of the lane, the GNSS positioned lane is determined to be correct, and no compensation is needed. In this case, the V2X scenario thread triggers lane-level events based on the corresponding GNSS data and V2X map data.

The GNSS compensation database collects at least one piece of GNSS compensation data and eliminates data that exceeds a specified time threshold for timeliness, such as discarding compensation data that is older than 2 hours.

The V2X scenario thread obtains the corresponding GNSS data, map data, and compensation data from the V2X map database, GNSS database, and GNSS compensation database, and correctly triggers the relevant lane-level events based on the GNSS data, map data, and compensation data. If multiple pieces of GNSS compensation data are available, theses data can be summarized and averaged to improve compensation accuracy and reduce errors and interference factors.

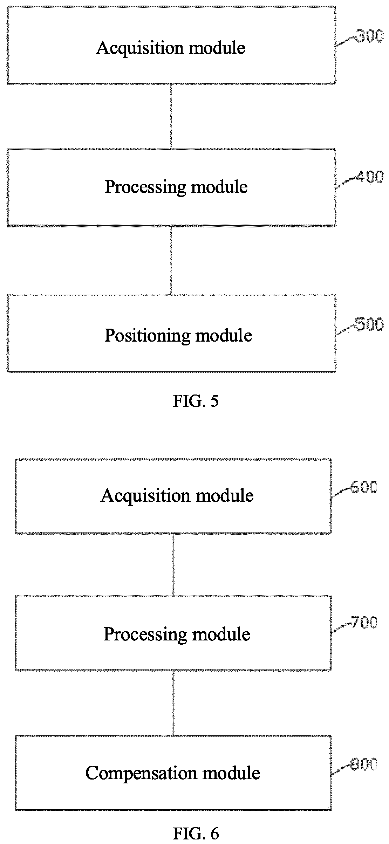

FIG. 5 is a structural schematic diagram of a positioning apparatus according to an embodiment of the present disclosure. As shown in FIG. 5, the accurate positioning apparatus according to this embodiment of the present disclosure can execute the accurate positioning method according to the embodiments of the present disclosure, has functional modules for execution of the method and can achieve corresponding technical effects. The apparatus can be realized by software, hardware or a combination of software and hardware, including: an acquisition module 300, a processing module 400, and a calibration module 500.

The acquisition module 300 is configured to acquire navigation information and V2X map information.

The processing module 400 is configured for at least one of: obtaining road information according to the navigation information and V2X map information; or obtaining motion trajectory information according to the navigation information.

The positioning module 500 is configured to obtain positioning information according to the road information, motion trajectory information, navigation information, and V2X map information.

In some possible implementations, the processing module 400 is further configured to: confirm lane driving direction information according to the road information; and confirm vehicle driving direction information according to the motion trajectory information. The positioning module 500 is further configured to compare the lane driving direction and the vehicle driving direction, and in response to the lane driving direction not matching the vehicle driving direction, calibrate the vehicle location according to the V2X map information.

In some possible implementations, the positioning apparatus is further provided with a compensation storage module, and the compensation storage module is configured to store the location compensation information generated by the positioning module 500.

In some possible implementations, the positioning apparatus is further provided with an interaction module, where the interaction module is configured to: generate user reminder information according to the information of the lane where the vehicle should be; increase the confidence level of the corresponding location compensation data in response to receiving user confirmation for the user reminder information; and decrease the confidence level of the corresponding location compensation data in response to receiving user denial for the user reminder information.

FIG. 6 is a structural schematic diagram of a positioning calibration apparatus according to an embodiment of the present disclosure. As shown in FIG. 6, the positioning calibration apparatus according to this embodiment of the present disclosure can execute the positioning calibration method according to the embodiments of the present disclosure, has functional modules for execution of the method and can achieve corresponding technical effects. The apparatus can be realized by software, hardware or a combination of software and hardware, including: an acquisition module 600, a processing module 700, and a compensation module 800.

The acquisition module 600 is configured for at least one of: acquiring geographical location information and V2X map information, where the geographical location information is obtained through the global navigation satellite system; or acquiring motion trajectory information, where the motion trajectory information is obtained through the global navigation satellite system.

The processing module 700 is configured to obtain road information according to the geographical location information and the V2X information.

The compensation module 800 is configured to obtain location compensation information according to the road information and the motion trajectory information.

In some possible implementations, the processing module 700 is further configured to: confirm lane driving direction information according to the road information; and confirm vehicle driving direction information according to the motion trajectory information. The compensation module 800 is further configured to compare the lane driving direction and the vehicle driving direction, and in response to the lane driving direction not matching the vehicle driving direction, calibrate the vehicle location according to the V2X map information.

In some possible implementations, the positioning calibration apparatus is further provided with a compensation storage module, and the compensation storage module is configured to store the location compensation information generated by the compensation module 800.

In some possible implementations, the positioning calibration apparatus is further provided with an interaction module, where the interaction module is configured to: generate user reminder information according to the information of the lane where the vehicle should be; increase the confidence level of the corresponding location compensation data in response to receiving user confirmation of the reminder information; and decrease the confidence level of the corresponding location compensation data in response to receiving user denial for the user reminder information.

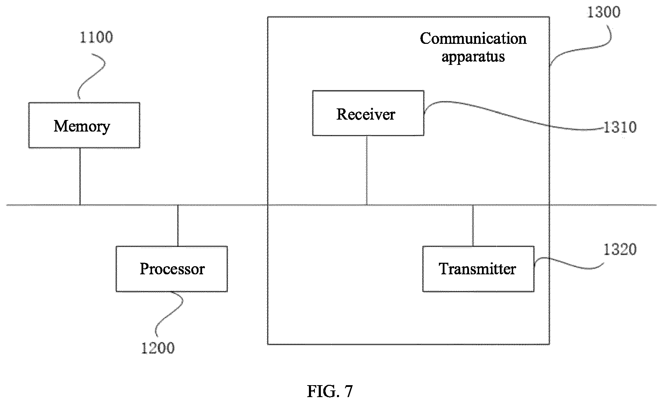

FIG. 7 is a structural schematic diagram of an electronic device according to an embodiment of the present disclosure. As shown in FIG. 7, the device includes a memory 1100, a processor 1200, and a communication apparatus 1300. There may be one or more memories 1100 and processors 1200, although one memory 1100 and one processor 1200 are shown as an example in FIG. 7. The memory 1100 and the processor 1200 of the device may be connected by a bus or in other ways. In FIG. 7, the connection is realized by a bus, for example.

As a computer-readable storage medium, the memory 1100 may be configured to store a software program, a computer-executable program and a module, for example, the program instructions/modules corresponding to the positioning calibration method of any one of the embodiments of the present disclosure. The processor 1200 implements the above positioning calibration method by running the software programs, instructions and modules stored in the memory 1110.

The memory 1100 may mainly include a program storage area and a data storage area, where the program storage area may store an operating system and application program(s) required by at least one feature. In addition, the memory 1100 may include a high-speed random-access memory and a non-volatile memory, for example, at least one magnetic disk storage device, a flash memory device, or another non-volatile solid-state storage device. In some examples, the memory 1100 may include memories remotely located with respect to the processor 1200, and these remote memories may be connected to devices via a network. Examples of the above-mentioned network include, but are not limited to, the Internet, an intranet, a local area network, a mobile communication network, and a combination thereof.

The communication apparatus 1300 is configured to transmit and receive information according to control of the processor 1200.

In an embodiment, the communication apparatus 1300 includes a receiver 1310 and a transmitter 1320. The receiver 1310 is a module or a combination of components in an electronic device that receives data. The transmitter 1320 is a module or a combination of components in an electronic device that transmits data.

A further embodiment of the present disclosure provides a computer-readable storage medium storing computer-executable instructions for executing the positioning calibration method as provided in any embodiment of the present disclosure.

The system architecture and an application scenario described in the embodiment of the present disclosure are for more clearly describing the technical schemes of the embodiments of the present disclosure, and do not constitute a limitation on the technical schemes provided by the embodiments of the present disclosure. Those of ordinary skill in the art may understand that, with evolution of the system architecture and emergence of new application scenarios, the technical schemes provided by the embodiments of the present disclosure are also applicable to similar technical problems.

It can be understood by those of ordinary skill in the art that all or some of the steps of the methods, systems and functional modules/units in the devices disclosed above can be implemented as software, firmware, hardware and appropriate combinations thereof.

In a hardware implementation, the division between functional modules/units mentioned in the above description does not necessarily correspond to the division of physical components; for example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, or a computer. As illustrated by using figures, both a computing device and an application that runs on a computing device may be components. One or more components may reside within a process or a thread of execution, and a component may be located on one computer or distributed between two or more computers. In addition, these components may be executed by various computer-readable media that store various data structures. For example, the components may communicate by using a local or remote process and based on a signal having one or more data packets (for example, data from two components interacting with another component in a local system, a distributed system, or across a network such as Internet interacting with another system by using the signal).

Some embodiments of the present disclosure have been described above with reference to the accompanying drawings and are not to limit the scope of the present disclosure. Any modifications, equivalent substitutions, and improvements made by those of ordinary skill in the art without departing from the scope and essence of the present disclosure shall fall within the scope of the present disclosure.

## Claims

1. A positioning calibration method, comprising:
acquiring navigation information and vehicle-to-everything, V2X, map information of a vehicle;
acquiring road information corresponding to a location of the vehicle based on the acquired navigation information and V2X map information;
obtaining motion trajectory information of the vehicle according to the navigation information; and
obtaining location compensation data according to the road information, the motion trajectory information, and the V2X map information.

2. The method of claim 1, wherein after the obtaining location compensation data according to the road information, the motion trajectory information, the navigation information, and the V2X map information, the method comprises:
obtaining positioning information according to the location compensation data, the navigation information, and the V2X map information.

3. The method of claim 1, wherein
the road information comprises lane driving direction information;
the motion trajectory information comprises vehicle driving direction information; and
the obtaining location compensation data according to the road information, the motion trajectory information, and the V2X map information comprises:
acquiring first lane data in the V2X map information according to the lane driving direction information;
acquiring second lane data in the V2X map information according to the vehicle driving direction information; and
calculating the location compensation data according to the first lane data and the second lane data.

4. The method of claim 1 or 3, wherein the location compensation data comprises at least one of: direction data, or distance data.

5. The method of claim 1, wherein the obtaining location compensation data according to the road information, the motion trajectory information, and the V2X map information comprises:
calculating the location compensation data according to the road information, the motion trajectory information, the V2X map information, and historical compensation data, wherein the historical compensation data comprises location compensation data acquired from the past.

6. The method of claim 5, wherein the calculating the location compensation data according to the road information, the motion trajectory information, the V2X map information, and historical compensation data comprises:
calculating current compensation data according to the road information, the motion trajectory information, and the V2X map information; and
calculating the location compensation data according to the current compensation data and the historical compensation data.

7. The method of claim 6, wherein the calculating the location compensation data according to the current compensation data and the historical compensation data comprises:
summarizing and averaging the current compensation data and the historical compensation data to obtain average compensation data; and
confirming the location compensation data according to the average compensation data.

8. The method of claim 5, wherein the historical compensation data is obtained according to at least one of:
a time threshold, wherein historical compensation data that falls within the time threshold is acquired; or
a distance threshold, wherein historical compensation data that falls within the distance threshold is acquired.

9. The method of claim 1, wherein the obtaining location compensation data according to the road information, the motion trajectory information, and the V2X map information comprises:
calculating the location compensation data according to the road information, the motion trajectory information, the V2X map information, and user feedback information.

10. The method of claim 9, further comprising:
in response to the user feedback information indicating that the location compensation data is accurate, increasing a confidence level of the corresponding location compensation data; and
in response to the user feedback information indicating that the location compensation data is erroneous, decreasing the confidence level of the corresponding location compensation data.

11. An electronic device, comprising: a memory, a processor, and a computer program stored in the memory and executable by the processor, wherein the computer program, when executed by the processor, causes the processor to implement the positioning calibration method of any one of claims 1 to 10.

12. A computer-readable storage medium, storing computer-executable instructions, wherein the computer-executable instructions, when executed by a computer, causes the computer to implement the positioning calibration method of any one of claims 1 to 10.
